# EUROPEAN PATENT APPLICATION

(11) **EP 3 648 531 A1**
(43) Date of publication of application: **06.05.2020**
(21) Application number: 17920508.3
(22) Date of filing: 31.07.2017
(51) Int. Cl.: H04W 72/12

(54) **ANCHOR CHANNEL TRANSMISSION METHOD AND APPARATUS, AND COMMUNICATION APPARATUS**

(71) Applicant: Huawei Technologies Co., Ltd., Longgang District Shenzhen, Guangdong 518129 (CN)
(72) Inventor: LI, Zhenyu, Shenzhen Guangdong 518129 (CN); ZHANG, Wurong, Shenzhen Guangdong 518129 (CN); NAN, Yang, Shenzhen Guangdong 518129 (CN)
(74) Representative: Pfenning, Meinig & Partner mbB
(86) International application number: PCT/CN2017/095099
(87) International publication number: WO 2019/023827

(57) **Abstract**

Embodiments of this application provide an anchor channel transmission method and apparatus, and a communications apparatus. According to the method, an anchor channel occupies a lowest frequency or a highest frequency of a system bandwidth, and power boosting is performed on at least the anchor channel. According to technical solutions provided in the embodiments of this application, the anchor channel may occupy the lowest frequency or the highest frequency of the system bandwidth, other anchor channels are adjacent to the anchor channel, and anchor channels in the other anchor channels are adjacent to each other, so that when power boosting is performed on one or more anchor channels, a smallest quantity of RBs lose powers. Alternatively, the anchor channel occupies the lowest frequency or the highest frequency of the system bandwidth, and another anchor channel and the anchor channel are not in a same resolution bandwidth, so that a power of at least one anchor channel can be boosted to a maximum extent, and a quantity of RBs that lose powers due to the power boosting of the anchor channel is reduced.

## Description

### TECHNICAL FIELD

This application relates to the communications field, and in particular, to an anchor channel transmission method and apparatus, and a communications apparatus.

### BACKGROUND

A spectrum is a basis for wireless communication. To ensure fair use of the spectrum, different spectrum regulations are formulated in various countries, and a wireless device can be used in a region only when the wireless device complies with a spectrum regulation in the region. A spectrum regulation in each country limits a power spectral density (Power Spectral Density, PSD) of a wideband transmission device, and the wideband transmission device can be used only after PSD authentication performed on the wideband transmission device succeeds.

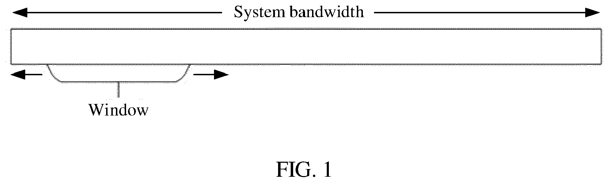

A principle of the PSD authentication is shown in FIG. 1. To be specific, frequency sweep is performed on a measured device within a system bandwidth (a transmission bandwidth supported by a system) by using a window with a fixed bandwidth, and a transmission power of the measured device in a resolution bandwidth (Resolution Bandwidth, namely, the bandwidth of the window) is recorded. If all transmission powers in the resolution bandwidth do not exceed a PSD limitation, PSD authentication performed on the measured device succeeds. For example, if the system bandwidth is 20 MHz, and the resolution bandwidth is 1.08 MHz, transmission powers of six RBs (Resource Block, resource block, where one RB is one slot in time domain and has a bandwidth of 180 kHz in frequency domain) are obtained each time by using the window. If the transmission powers obtained each time do not exceed the PSD limitation, the PSD authentication performed on the measured device succeeds.

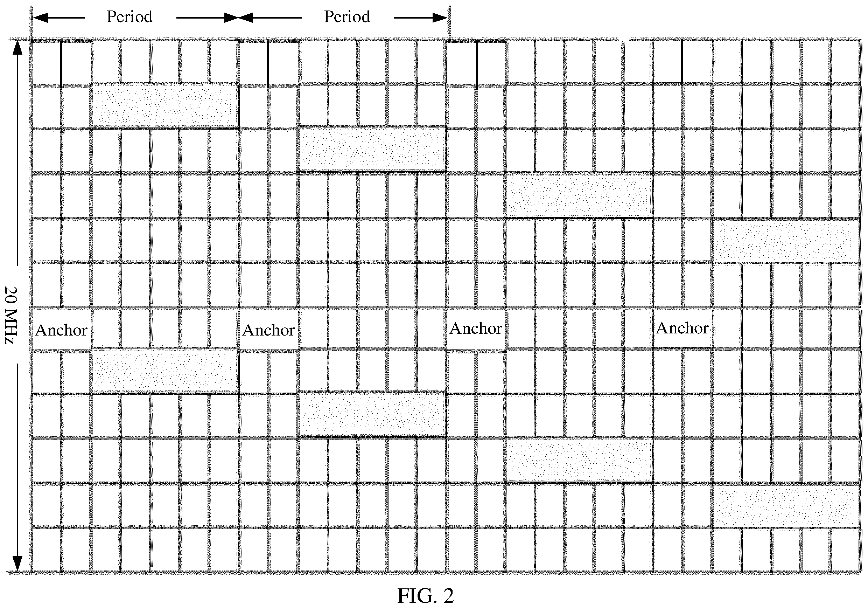

In a communications system, a synchronization signal, a broadcast signal, and a call signal are usually transmitted at fixed frequencies, and occupy anchor channels (Anchor Channel) in a system bandwidth. As shown in FIG. 2, the system bandwidth is 20 MHz, and in each transmission period (Period), the synchronization signal and the broadcast signal are always transmitted on a same anchor channel (a channel marked as "Anchor" in FIG. 2). To ensure successful access of UE (User Equipment, user equipment) and quick synchronization between the UE and a base station, the anchor channel needs to have a sufficient transmission power to transmit the synchronization signal, the broadcast signal, or the call signal. However, a PSD limitation specified by a spectrum regulation on a wideband transmission device (for example, a digital modulation device or a wideband modulation device) may cause an excessively low transmission power on the anchor channel. Consequently, a downlink coverage capability of the system is greatly reduced. For example, a resolution bandwidth for PSD authentication is 1.08 MHz. A PSD limitation specified by a US regulation on a wideband digital modulation (Digital Modulation) device is 8 dBm/3 KHz (in a 2.4 GHz frequency band and a sub-1 GHz frequency band). To be specific, a PSD on one RB (Resource Block) may be equal to 25.8 dBm/180 kHz. A PSD limitation specified by a European regulation on a wideband modulation (Wideband Modulation) device is 10 dBm/MHz (in a 2.4 GHz frequency band). In this case, a transmission power of one RB may be only 2 dBm. If one RB is used as an anchor channel to transmit the synchronization signal, a transmission power of the synchronization signal is only 2 dBm.

Therefore, how to improve transmission performance of an anchor channel is a technical problem that urgently needs to be resolved.

### SUMMARY

This application provides an anchor channel transmission method and apparatus, and a communications apparatus, to improve transmission performance of an anchor channel, for example, to increase a degree of power boosting of the anchor channel or to reduce a quantity of RBs that lose powers after power boosting is performed on the anchor channel.

According to a first aspect, this application provides an anchor channel transmission method. The method includes: determining, by a network device, a first anchor channel, where the first anchor channel occupies a first end frequency of a first bandwidth, and the first end frequency is either of a lowest frequency and a highest frequency of the first bandwidth; and sending, by the network device, a first signal by using the first anchor channel, where the first signal is one or more of a synchronization signal, a broadcast signal, or a call signal. The first bandwidth is a system bandwidth. According to this implementation, a degree of power boosting of an anchor channel can be improved, or a quantity of RBs that lose powers after power boosting is performed on an anchor channel can be reduced. Because power boosting is performed on at least the first anchor channel, a quantity of RBs that lose powers due to the power boosting of the first anchor channel is the smallest.

With reference to the first aspect, in a first possible implementation of the first aspect, the network device performs power boosting on the first anchor channel, to increase a power of a signal transmitted on the first anchor channel.

With reference to the first aspect, in a second possible implementation of the first aspect, the network device determines a second anchor channel, the second anchor channel is used to send a second signal, and the second signal is one or more of a synchronization signal, a broadcast signal, or a call signal. This can facilitate configuration of a plurality of anchor channels.

With reference to the second possible implementation of the first aspect, in a third possible implementation of the first aspect, the second anchor channel occupies a second end frequency of the first bandwidth, and the second end frequency is another end frequency other than the first end frequency in the lowest frequency and the highest frequency of the first bandwidth. According to this implementation, a quantity of RBs that lose powers due to power boosting of the second anchor channel can be the smallest.

With reference to the second possible implementation of the first aspect, in a fourth possible implementation of the first aspect, the second anchor channel is adjacent to the first anchor channel in frequency domain. According to this implementation, a quantity of RBs that lose powers due to power boosting of the first anchor channel and/or the second anchor channel can be the smallest.

With reference to the second possible implementation of the first aspect or the third possible implementation of the first aspect, in a fifth possible implementation of the first aspect, the first anchor channel and the second anchor channel are not in a same second bandwidth. According to this implementation, when the power boosting is performed on the first anchor channel, a power of the first anchor channel can be boosted to a maximum extent, and a quantity of RBs that lose powers due to the power boosting of the first anchor channel is the smallest.

With reference to the fifth possible implementation of the first aspect, in a sixth possible implementation of the first aspect, the second bandwidth is a resolution bandwidth for power spectral density authentication.

With reference to any one of the second possible implementation to the sixth possible implementation of the first aspect, in a seventh possible implementation of the first aspect, the network device performs power boosting on at least one of the first anchor channel and the second anchor channel. Therefore, a power of a signal transmitted on at least one of the first anchor channel and the second anchor channel increases.

With reference to any one of the second possible implementation to the sixth possible implementation of the first aspect, in an eighth possible implementation of the first aspect, the network device determines a third anchor channel, the third anchor channel is used to send a third signal, and the third signal is one or more of a synchronization signal, a broadcast signal, or a call signal. This can facilitate configuration of a plurality of anchor channels.

With reference to the eighth possible implementation of the first aspect, in a ninth possible implementation of the first aspect, the third anchor channel is adjacent to the first anchor channel in frequency domain, or the third anchor channel is adjacent to the second anchor channel in frequency domain. According to this implementation, a quantity of RBs that lose powers due to power boosting of the first anchor channel, the second anchor channel, and/or the third anchor channel can be the smallest.

With reference to the eighth possible implementation of the first aspect, in a tenth possible implementation of the first aspect, the third anchor channel is not adjacent to each of the first anchor channel and the second anchor channel in frequency domain. According to this implementation, when power boosting is performed on the first anchor channel and the second anchor channel, a power of the first anchor channel and a power of the second anchor channel can be boosted to a maximum extent, and a quantity of RBs that lose powers due to the power boosting of the first anchor channel and the second anchor channel is the smallest.

With reference to any one of the eighth possible implementation to the tenth possible implementation of the first aspect, the network device performs power boosting on at least one of the first anchor channel, the second anchor channel, and the third anchor channel. Therefore, a power of a signal transmitted on at least one of the first anchor channel, the second anchor channel, and the second anchor channel increases.

According to a second aspect, this application provides an anchor channel receiving method. The method includes: determining, by a terminal, a first anchor channel, where the first anchor channel occupies a first end frequency of a first bandwidth, and the first end frequency is either of a lowest frequency and a highest frequency of the first bandwidth; and receiving, by the terminal, a first signal by using the first anchor channel, where the first signal is one or more of a synchronization signal, a broadcast signal, or a call signal. The first bandwidth is a system bandwidth. According to this implementation, the terminal can determine an anchor channel based on the highest frequency and/or the lowest frequency.

With reference to the second aspect, in a first possible implementation of the second aspect, the first anchor channel is an anchor channel on which power boosting is performed. Therefore, a power of a signal received by the terminal on the first anchor channel increases.

With reference to the second aspect or the first possible implementation of the second aspect, in a second possible implementation of the second aspect, the determining, by a terminal, a first anchor channel includes: determining the highest frequency and/or the lowest frequency of the first bandwidth based on a center frequency of the first bandwidth; and determining, based on the highest frequency and/or the lowest frequency, the first anchor channel occupying the highest frequency or the lowest frequency. The center frequency of the first bandwidth is usually prespecified. According to this implementation, the terminal can conveniently determine an anchor channel based on the center frequency of the first bandwidth.

With reference to the second possible implementation of the second aspect, in a third possible implementation of the second aspect, the method further includes: determining another anchor channel adjacent to the first anchor channel in frequency domain. According to this implementation, after the first anchor channel is determined, the another anchor channel can also be conveniently determined.

With reference to the second aspect or the first possible implementation of the second aspect, in a fourth possible implementation of the second aspect, the method further includes: determining, by the terminal, a second anchor channel, where the second anchor channel occupies a second end frequency of the first bandwidth, and the second end frequency is another end frequency other than the first end frequency in the lowest frequency and the highest frequency of the first bandwidth. According to this implementation, an anchor channel at the another end frequency that is other than the first anchor channel can be conveniently determined.

With reference to the fourth possible implementation of the second aspect, in a fifth possible implementation of the second aspect, the method further includes: determining another anchor channel adjacent to the second anchor channel in frequency domain. According to this implementation, after the first anchor channel and the second anchor channel are determined, the another anchor channel can also be conveniently determined.

According to a third aspect, this application provides a communications apparatus. The communications apparatus includes at least one processor and at least one memory, the at least one memory stores computer program code, and the processor executes the computer program code in the memory to implement the method according to the first aspect or the second aspect.

According to a fourth aspect, this application provides an anchor channel transmission apparatus. The apparatus includes: a processing unit, configured to determine a first anchor channel, where the first anchor channel occupies a first end frequency of a first bandwidth, and the first end frequency is either of a lowest frequency and a highest frequency of the first bandwidth; and a sending unit, configured to send a first signal by using the first anchor channel, where the first signal is one or more of a synchronization signal, a broadcast signal, or a call signal. The first bandwidth is a system bandwidth.

With reference to the fourth aspect, in a first possible implementation of the fourth aspect, the processing unit is further configured to perform power boosting on the first anchor channel.

With reference to the fourth aspect or the first possible implementation of the fourth aspect, in a second possible implementation of the fourth aspect, the processing unit is further configured to determine a second anchor channel, the sending unit is further configured to send a second signal by using the second anchor channel, and the second signal is one or more of a synchronization signal, a broadcast signal, or a call signal.

With reference to the second possible implementation of the fourth aspect, in a third possible implementation of the fourth aspect, the second anchor channel occupies a second end frequency of the first bandwidth, and the second end frequency is another end frequency other than the first end frequency in the lowest frequency and the highest frequency of the first bandwidth.

With reference to the second possible implementation of the fourth aspect, in a fourth possible implementation of the fourth aspect, the second anchor channel is adjacent to the first anchor channel.

With reference to the second possible implementation of the fourth aspect or the third possible implementation of the fourth aspect, in a fifth possible implementation of the fourth aspect, the first anchor channel and the second anchor channel are not in a same second bandwidth.

With reference to the fifth possible implementation of the fourth aspect, in a sixth possible implementation of the fourth aspect, the second bandwidth is a resolution bandwidth for power spectral density authentication.

With reference to any one of the third possible implementation to the sixth possible implementation of the fourth aspect, in a seventh possible implementation of the fourth aspect, the processing unit is further configured to perform power boosting on at least one of the first anchor channel and the second anchor channel.

According to a fifth aspect, this application provides an anchor channel receiving apparatus. The apparatus includes: a processing unit, configured to determine a first anchor channel, where the first anchor channel occupies a first end frequency of a first bandwidth, and the first end frequency is either of a lowest frequency and a highest frequency of the first bandwidth; and a receiving unit, configured to receive a first signal by using the first anchor channel, where the first signal is one or more of a synchronization signal, a broadcast signal, or a call signal. The first bandwidth is a system bandwidth.

With reference to the fifth aspect, in a first possible implementation of the fifth aspect, the first anchor channel is an anchor channel on which power boosting is performed.

With reference to the fifth aspect or the first possible implementation of the fifth aspect, in a second possible implementation of the fifth aspect, the processing unit is specifically configured to: determine the highest frequency and/or the lowest frequency of the first bandwidth based on a center frequency of the first bandwidth; and determine, based on the highest frequency and/or the lowest frequency, the first anchor channel occupying the highest frequency or the lowest frequency.

With reference to the second possible implementation of the fifth aspect, in a third possible implementation of the fifth aspect, the processing unit is further configured to determine another anchor channel adjacent to the first anchor channel in frequency domain.

With reference to the fifth aspect or the first possible implementation of the fifth aspect, in a fourth possible implementation of the fifth aspect, the processing unit is further configured to determine a second anchor channel, where the second anchor channel occupies a second end frequency of the first bandwidth, and the second end frequency is another end frequency other than the first end frequency in the lowest frequency and the highest frequency of the first bandwidth.

With reference to the fourth possible implementation of the fifth aspect, in a fifth possible implementation of the fifth aspect, the processing unit is further configured to determine another anchor channel adjacent to the second anchor channel in frequency domain.

According to a sixth aspect, this application provides a computer-readable storage medium, including an instruction. When the instruction is run on a computer, the computer is enabled to perform the method according to the first aspect or the second aspect.

According to a seventh aspect, this application provides a computer program product including an instruction, and when the computer program product is run on a computer, the computer is enabled to perform the method according to the first aspect or the second aspect.

According to anchor channel transmission technical solutions provided in the embodiments of this application, an anchor channel occupies the lowest frequency or the highest frequency of the system bandwidth, and power boosting is performed on the anchor channel. According to the technical solutions, the anchor channel may occupy the lowest frequency or the highest frequency of the system bandwidth, other anchor channels are adjacent to the anchor channel, and anchor channels in the other anchor channels are adjacent to each other, so that when power boosting is performed on one or more anchor channels, a smallest quantity of RBs lose powers. Alternatively, the anchor channel occupies the lowest frequency or the highest frequency of the system bandwidth, and another anchor channel and the anchor channel are not in a same resolution bandwidth, so that a power of the anchor channel can be boosted to a maximum extent, and a quantity of RBs that lose powers due to the power boosting of the anchor channel is reduced.

### BRIEF DESCRIPTION OF DRAWINGS

FIG. 1 is a schematic diagram of a PSD authentication principle in the prior art;
FIG. 2 is a schematic diagram of an anchor channel in a system bandwidth;

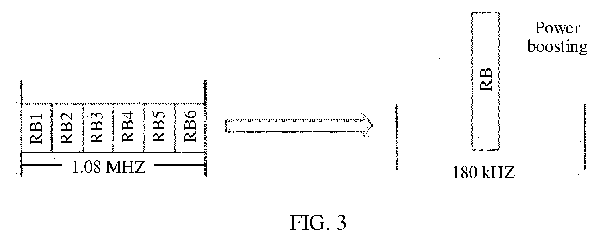

FIG. 3 is a schematic diagram of performing power boosting on an anchor channel;

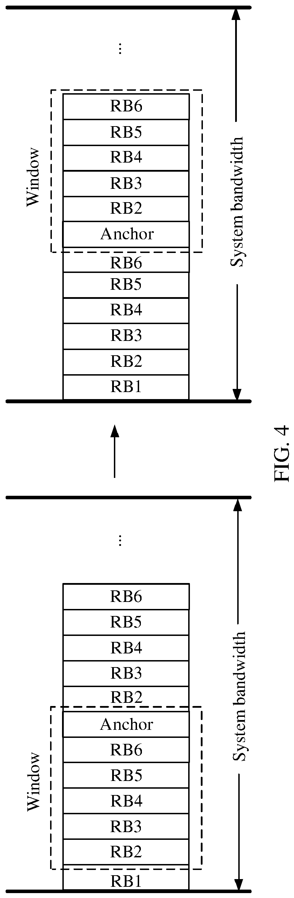

FIG. 4 is a schematic diagram in which an RB loses a power when power boosting is performed on an anchor channel;
FIG. 5 is a schematic flowchart of an anchor channel transmission method according to an embodiment of this application;
FIG. 6 is an example diagram of a first possible implementation of the anchor channel transmission method shown in FIG. 5;
FIG. 7a to FIG. 7d are an example diagram of another implementation of the anchor channel transmission method shown in FIG. 5;
FIG. 8a to FIG. 8d-1 and FIG. 8d-2 are an example diagram of a second possible implementation of the anchor channel transmission method shown in FIG. 5;
FIG. 9 is a schematic flowchart of an anchor channel receiving method applied to a terminal according to an embodiment of this application;
FIG. 10 is a schematic structural diagram of a network device according to an embodiment of this application;
FIG. 11 is a schematic structural diagram of a terminal according to an embodiment of this application;
FIG. 12 is a block diagram of an anchor channel transmission apparatus according to an embodiment of this application; and
FIG. 13 is a block diagram of an anchor channel receiving apparatus according to an embodiment of this application.

### DESCRIPTION OF EMBODIMENTS

In a communications technology, a minimum unit of time domain resource allocation and frequency domain resource allocation is an RB, and one RB is one slot in time domain, has a bandwidth of 180 kHz in frequency domain, and includes 12 subcarriers. A subcarrier spacing is 15 kHz.

According to the latest international spectrum white paper released by the Federal Communications Commission (Federal Communications Commission, FCC), unlicensed (unlicensed) spectrum resources are more than licensed spectrum resources. If an unlicensed spectrum can be used effectively, spectrum efficiency of wireless communication is necessarily improved greatly. A spectrum is a basis for wireless communication. To ensure fair use of the spectrum, different spectrum regulations are formulated in various countries, and a wireless device can be used in a region only when the wireless device complies with a spectrum regulation in the region, and the wireless device especially needs to comply with a specific regulation and rule when being used on an unlicensed spectrum.

According to a spectrum regulation in each country, especially in use of the unlicensed spectrum, a PSD of a wideband transmission device is limited, and the wideband transmission device can be used only after corresponding PSD authentication performed on the wideband transmission device succeeds. A principle of the PSD authentication is as follows: Frequency sweep is performed on a measured device within a system bandwidth by using a window with a fixed bandwidth, and a transmission power of the measured device in a resolution bandwidth (namely, the bandwidth of the window) is recorded. If all transmission powers in the resolution bandwidth do not exceed a PSD limitation, PSD authentication performed on the measured device succeeds. For example, if the system bandwidth is 20 MHz, and the resolution bandwidth is 1.08 MHz, transmission powers of six RBs are obtained each time by using the window. If the transmission powers obtained each time do not exceed the PSD limitation, the PSD authentication performed on the measured device succeeds.

An anchor channel is a channel that is in the system bandwidth and that is used to transmit a synchronization signal, a broadcast signal, or a call signal. One or more anchor channels may be configured in one system bandwidth. Only one of the synchronization signal, the broadcast signal, or the call signal may be transmitted on one anchor channel. Alternatively, the synchronization signal and the broadcast signal may be transmitted on one anchor channel in a time division multiplexing manner, the broadcast signal and the call signal may be transmitted on one anchor channel in a time division multiplexing manner, the synchronization signal and the call signal may be transmitted on one anchor channel in a time division multiplexing manner, or the synchronization signal, the broadcast signal, and the call signal may be transmitted on one anchor channel in a time division multiplexing manner. A quantity of anchor channels in the system bandwidth and a type of a signal transmitted on an anchor channel may be preset based on an actual application situation. It should be noted that the call signal may not be transmitted by using the anchor channel.

To ensure successful access of UE and quick synchronization between the UE and a base station, the anchor channel needs to have a sufficient transmission power to transmit the synchronization signal, the broadcast signal, or the call signal. However, a limitation specified by a spectrum regulation may cause an excessively low transmission power of a wideband transmission device (for example, a digital modulation device or a wideband modulation device) on the anchor channel. Consequently, a downlink coverage capability of a system is greatly reduced. For example, a resolution bandwidth for PSD authentication is 1.08 MHz. A PSD limitation specified by a European regulation on a wideband modulation (Wideband Modulation) device is 10 dBm/MHz (in a 2.4 GHz frequency band). In this case, a transmission power of one RB may be only 2 dBm. If one RB is used as an anchor channel to transmit the synchronization signal, a transmission power of the synchronization signal is only 2 dBm.

In addition, in some communications systems, data transmission and receiving of UE are based on a minimum frequency bandwidth. For example, in eMTC (enhanced Machine Type Communication, enhanced machine type communication), a system bandwidth is divided into a plurality of NBs (Narrow Band, narrowband) of 1.4 MHz in frequency domain, each narrowband includes six RBs, and a base station schedules the UE to use a specific narrowband. For a narrowband system based on the minimum frequency bandwidth, such as an eMTC system, an anchor channel can occupy only fewer than six RBs. To support a low power consumption device, the anchor channel may need to occupy fewer RBs. For example, NB-IoT (cellular-based narrowband internet of things, Narrow Band Internet of Things) supports a cellular data connection of the low power consumption device in a wide area network, and the anchor channel occupies only one RB to transmit a synchronization signal. Because a small quantity of RBs are occupied, a transmission power of the anchor channel is very low.

To resolve a problem of the excessively low transmission power on the anchor channel, a feasible solution is to perform power boosting (Power Boosting) on the anchor channel, that is, to centralize all powers in a resolution bandwidth for PSD authentication to the RB occupied by the anchor channel, so that an average power spectral density of the anchor channels is higher than an average power spectral density of the system bandwidth. Power boosting can be used to boost a power of a signal received by a terminal, so as to implement long-distance synchronization between the terminal and the base station, and improve a downlink coverage capability of a system. For example, the resolution bandwidth is 1.08 MHz, including six RBs. The anchor channel occupies one RB. Power boosting is to centralize powers of the other five RBs to the RB occupied by the anchor channel, and no information is transmitted on the other five RBs.

In addition, it is assumed that a plurality of anchor channels are within a resolution bandwidth. For example, there are two anchor channels in a system bandwidth, and each anchor channel occupies one RB. If boosting is performed on the two anchor channels, powers of the other four RBs are centralized to two RBs occupied by the two anchor channels, and powers of the RBs are the same. If boosting is performed on only one anchor channel, for example, one anchor channel is used to transmit a synchronization signal, and the other anchor channel is used to transmit a broadcast signal, and power boosting is performed only on the anchor channel for transmitting the synchronization signal, powers of the other four RBs are centralized to the anchor channel for transmitting the synchronization signal. However, regardless of whether power boosting is performed on the two anchor channels or on only one of the two anchor channels, the power of the anchor channel cannot be maximum.

To ensure that PSD authentication performed on a wideband transmission device succeeds, after power boosting is performed on an anchor channel, powers of RBs occupied by non-anchor channels on two sides of the anchor channel are lost, resulting in system performance reduction. For example, if a system bandwidth is 20 MHz, and a resolution bandwidth is 1.08 MHz, transmission powers of six RBs are obtained each time by using a window. After power boosting is performed on the anchor channel, if the anchor channel is in the window, a power of another RB other than an RB occupied by the anchor channel in the resolution bandwidth is lost, resulting in system performance reduction.

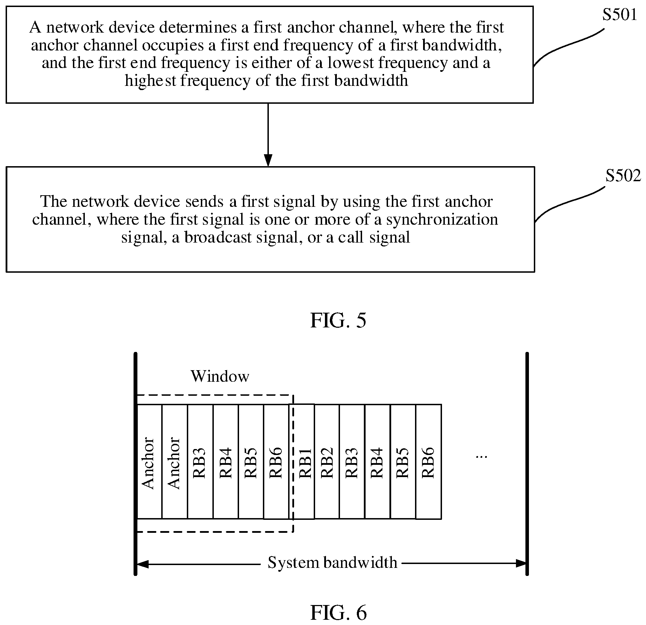

An embodiment of this application provides an anchor channel transmission method, to increase a degree of power boosting of an anchor channel or reduce a quantity of RBs that lose powers after power boosting is performed on an anchor channel. As shown in FIG. 5, the method includes the following steps:
Step S501: A network device determines a first anchor channel, where the first anchor channel occupies a first end frequency of a first bandwidth, and the first end frequency is either of a lowest frequency and a highest frequency of the first bandwidth.
Step S502: The network device sends a first signal by using the first anchor channel, where the first signal is one or more of a synchronization signal, a broadcast signal, or a call signal.

The first bandwidth is a system bandwidth.

In a communications system, when channel configuration is performed, a center frequency of the system bandwidth is first fixed, and then a frequency sequence is obtained based on the center frequency and a size of the system bandwidth. The frequency sequence is arranged in size. Each channel occupies one frequency. The highest frequency and the lowest frequency are frequencies at two ends of the frequency sequence, and are equivalent to frequencies occupied by channels at edges of the system bandwidth. The highest frequency and the lowest frequency are referred to as end frequencies of the system bandwidth. The frequency refers to a specific absolute frequency value, and is usually a center frequency of a modulated signal. To be specific, the first bandwidth is divided into n channels: Ch1 and Ch2 to ChN based on frequencies. Bandwidths of all channels may be the same or different. fch1 and fch2 to fchN are respectively center frequencies of the channel Ch1 and the channel Ch2 to the channel ChN, and fnch1 and fnch2 to fnchN are respectively frequency channel numbers of the channel Ch1 and the channel Ch2 to the channel ChN. If a sequence obtained by arranging the center frequencies in ascending order is fch1 < fch2 < ... < fchN, a sequence obtained by arranging the frequency channel numbers in ascending order is fnch1 < fnch2 < ... < fnchN. The channel Ch1 is a channel occupying the lowest frequency, and the channel ChN is a channel occupying the highest frequency.

According to the method, one anchor channel (namely, the first anchor channel) in anchor channels occupies one end frequency, and the anchor channel may occupy the highest frequency or the lowest frequency. In other words, configuring one anchor channel in the anchor channels as the channel Ch1 or the channel ChN is equivalent to configuring the anchor channel in the anchor channels at an edge of the system bandwidth. Because power boosting is performed on at least the first anchor channel, a quantity of RBs that lose powers due to the power boosting of the first anchor channel is the smallest.

After configuration of the first anchor channel is completed, power boosting is performed on at least the first anchor channel. If there is only one anchor channel, in other words, there is only the first anchor channel, power boosting is performed on the first anchor channel. If there are a plurality of anchor channels, power boosting may be performed on at least the first anchor channel, and power boosting may also be performed on another anchor channel other than the first anchor channel. A transmission power of a signal (one or more of a synchronization signal, a broadcast signal, and a call signal) on the anchor channel can be increased by performing power boosting on the anchor channel.

In a first possible implementation, one anchor channel is configured as a channel that occupies one end frequency of the first bandwidth. In other words, one anchor channel in the anchor channels occupies one end frequency of the system bandwidth. If there is only one anchor channel, the anchor channel occupies the highest frequency or the lowest frequency, to complete anchor channel configuration. If there are a plurality of anchor channels, one (the first anchor channel) of the plurality of anchor channels occupies the highest frequency or the lowest frequency, and another anchor channel is adjacent to the first anchor channel. If there are a plurality of other anchor channels, all of the other anchor channels are adjacent to each other. That the anchor channels are adjacent to each other means that the anchor channels are adjacent to each other in frequency domain. There is no frequency between frequencies of adjacent anchor channels, and there is no channel between adjacent anchor channels.

In this implementation, the anchor channels are arranged adjacently, and are configured as a whole at an edge of the system bandwidth. For example, as shown in FIG. 6, there are two anchor channels, either (namely, the first anchor channel) of the anchor channels occupies the lowest frequency, and the other anchor channel (namely, a second anchor channel) is adjacent to the first anchor channel. This is equivalent to that the two anchor channels are adjacently configured at a left end of the system bandwidth in the figure.

In the example shown in FIG. 6, the system bandwidth is 20 MHZ, each anchor channel occupies one RB, and a resolution bandwidth for PSD authentication occupies six RBs. If power boosting is performed on only the first anchor channel, powers of four RBs on a right side of the second anchor channel are centralized to the first anchor channel, and a power of the second anchor channel does not change. If power boosting is performed on the two anchor channels, when the two anchor channels are in one resolution bandwidth, powers of four RBs on a right side of the second anchor channel are centralized to the two anchor channels, and powers allocated to all anchor channels are the same. If powers of all of the four RBs are equal, it is equivalent to that powers of two RBs are added to each anchor channel.

Regardless of whether power boosting is performed on only the first anchor channel or power boosting is performed on the two anchor channels, only an RB on the right side of the second anchor channel loses a power. It is clearly that, if the first anchor channel occupies the highest frequency, and the two anchor channels are adjacently configured at a right end of the system bandwidth in the figure, only an RB on a left side of the second anchor channel loses a power. In this way, a quantity of RBs that lose powers due to power boosting is the smallest.

In the following example, unless otherwise specified, the system bandwidth is 20 MHz, the resolution bandwidth for PSD authentication occupies six RBs, and a single anchor channel occupies one RB.

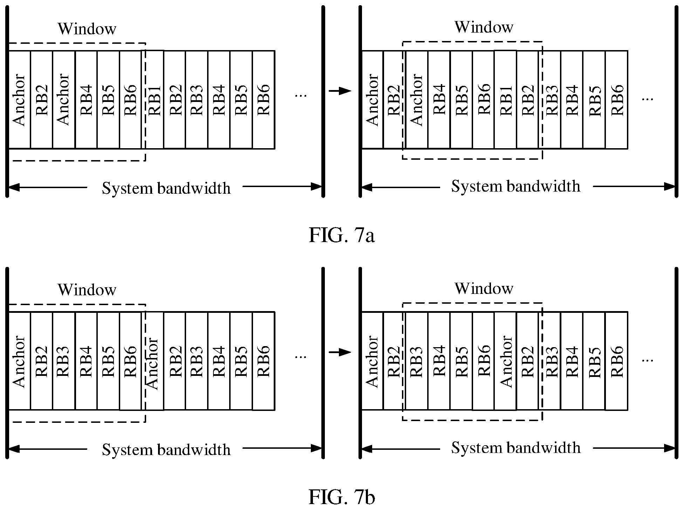

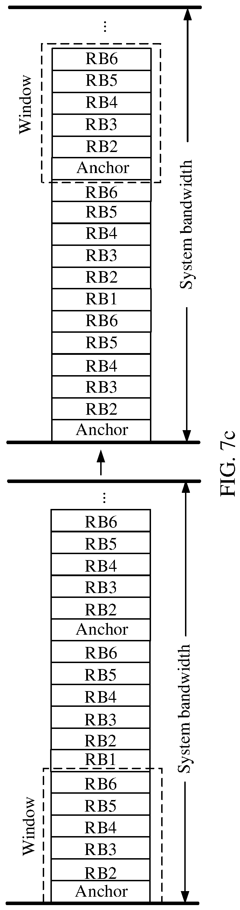

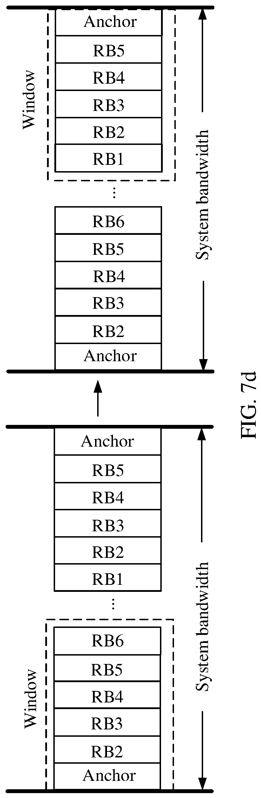

In the first possible implementation, the quantity of RBs that lose powers due to the power boosting of the anchor channel can be the smallest. If the first possible implementation is not used, the quantity of RBs that lose powers after the power boosting of the anchor channel cannot be the smallest in another implementation. For example, there are two anchor channels, the first anchor channel occupies one end frequency of the system bandwidth, the other anchor channel (namely, the second anchor channel) is not adjacent to the first anchor channel, and the second anchor channel and the first anchor channel are separated by one RB. As shown in FIG. 7a, if power boosting is performed on only the first anchor channel, powers of four RBs are lost. If power boosting is performed on the two anchor channels, powers of four RBs are lost when the two anchor channels are in a window, or powers of five RBs on the right side of the second anchor channel are lost when only the second anchor channel is in a window and is at a left end of the window. In this configuration manner, powers of six RBs are lost in total. For another example, the first anchor channel is configured at one end of the system bandwidth, and the second anchor channel and the first anchor channel are separated by five RBs. As shown in FIG. 7b, if power boosting is performed on only the first anchor channel, powers of five RBs are lost. If power boosting is performed on the two anchor channels, powers of 10 RBs are lost in total. For another example, the first anchor channel is configured at one end of the system bandwidth, and the second anchor channel and the first anchor channel are separated by 10 RBs. As shown in FIG. 7c, if power boosting is performed on only the first anchor channel, powers of five RBs are lost. If power boosting is performed on the two anchor channels, powers of 15 RBs are lost in total. For another example, one anchor channel (namely, the first anchor channel) occupies the lowest frequency (or the highest frequency), and the other anchor channel (namely, the second anchor channel) occupies the highest frequency (or the lowest frequency). As shown in FIG. 7d, if power boosting is performed on the two anchor channels, powers of 10 RBs are lost in total. It can be learned that, if the first possible implementation is not used, the quantity of RBs that lose powers cannot be the smallest.

However, when there are two or more anchor channels, in the first possible implementation, powers of all anchor channels cannot be boosted to a maximum extent, and a power of the first anchor channel cannot be boosted to a maximum extent. For example, in the example shown in FIG. 6, when power boosting is performed on only the first anchor channel, powers of only four RBs can be centralized to the first anchor channel.

To enable a power of at least one anchor channel to be boosted to a maximum extent, and reduce a quantity of RBs that lose powers, in a second possible implementation, one anchor channel is configured as a channel that occupies one end frequency of the system bandwidth. In other words, one anchor channel (the first anchor channel) occupies one end frequency of the system bandwidth. If there are two or more anchor channels, another anchor channel other than the first anchor channel and the first anchor channel are not in one second bandwidth. The second bandwidth is a resolution bandwidth for PSD authentication. In this way, a quantity of RBs that lose powers due to power boosting of the first anchor channel can be reduced, a power of the first anchor channel is boosted to a maximum extent, and a power of the another anchor channel can also be boosted to a maximum extent. For example, the first anchor channel is configured at one end of the system bandwidth, and the another anchor channel (the second anchor channel) is configured at a location separated from the first anchor channel by five RBs. As shown in FIG. 7b, if power boosting is performed on only the first anchor channel, powers of five RBs on the right side of the first anchor channel are centralized to the first anchor channel, so that the power of the first anchor channel can be boosted to a maximum extent. If power boosting is also performed on the second anchor channel, powers of five RBs on a right side of the second anchor channel may be centralized to the second anchor channel, so that a power of the second anchor channel can also be boosted to a maximum extent. In addition, because the first anchor channel is configured at an edge of the system bandwidth, compared with that in a case in which the first anchor channel is configured in the middle of the system bandwidth, a quantity of RBs that lose powers is relatively small. For example, if the first anchor channel is configured at a location separated from the edge of the bandwidth by one RB, powers of 11 RBs are lost in total. However, when the first anchor channel is configured at the edge of the system bandwidth, 10 RBs in total lose powers.

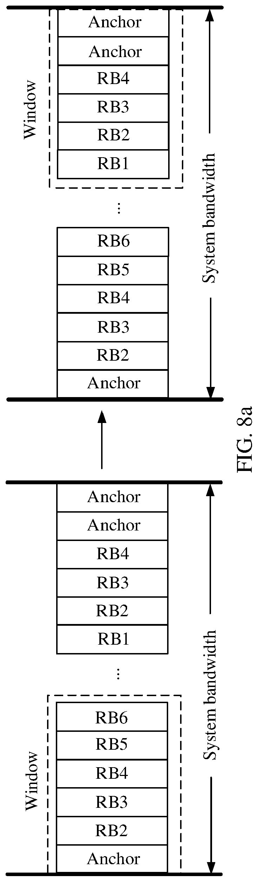

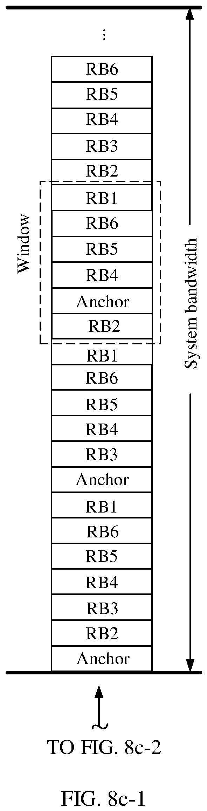

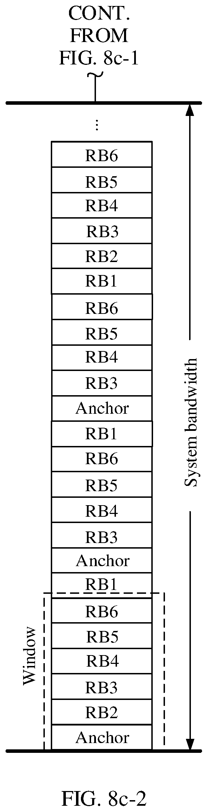

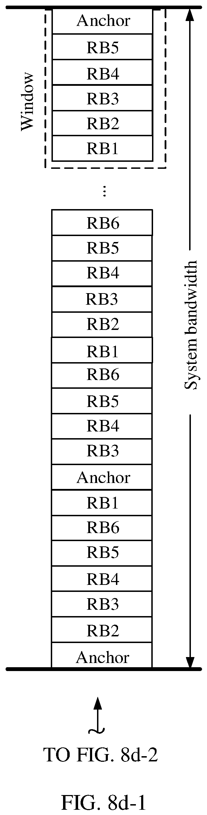

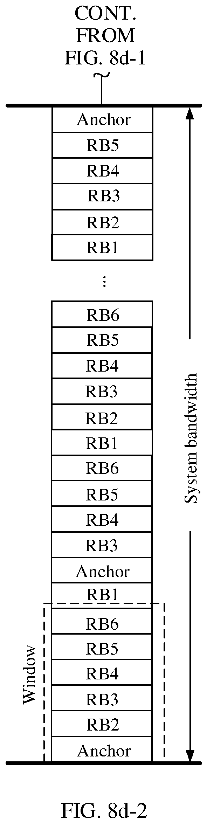

If power boosting is performed on anchor channels other than the first anchor channel, to further reduce a quantity of RBs that lose powers, one anchor channel (the second anchor channel) in the other anchor channels may occupy the other end frequency of the system bandwidth, and all of the other anchor channels are adjacent to each other. As shown in FIG. 8a, there are three anchor channels. The first anchor channel occupies the lowest frequency of the system bandwidth, and is configured at a left end of the system bandwidth in the figure. One anchor channel (the second anchor channel) in the other two anchor channels occupies the highest frequency of the system bandwidth, and the other anchor channel (a third anchor channel) is adjacent to the anchor channel. In other words, the other two anchor channels are configured at a right end of the system bandwidth in the figure. In this way, the power of the first anchor channel can be boosted to a maximum extent, and although powers of both of the other anchor channels cannot be boosted to a maximum extent, when the power of the first anchor channel is boosted to a maximum extent, a total quantity of RBs that lose powers is the smallest.

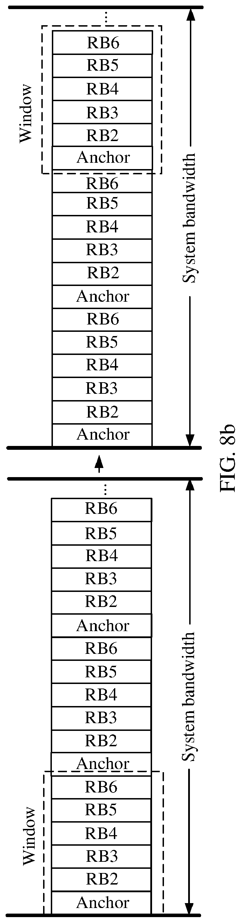

When there are two or more anchor channels, it may be insufficient to perform power boosting on only one anchor channel, and power boosting may be performed on two or more anchor channels based on a requirement. If it is expected that powers of all anchor channels can be boosted to a maximum extent, the other anchor channels cannot be in one second bandwidth. The second bandwidth is a resolution bandwidth for PSD authentication. As shown in FIG. 8b, there are five RBs between every two anchor channels. In this way, when power boosting is performed on each anchor channel, powers of five RBs on one side of the anchor channel may be centralized to the RB, so that a power of the RB is boosted to a maximum extent. However, in this configuration manner, a relatively large quantity of RBs lose powers. In FIG. 8b, a total quantity of RBs that lose powers is 15. As shown in FIG. 8c-1 and FIG. 8c-2, if there are six RBs between every two anchor channels, a total quantity of RBs that lose powers is 17.

When powers of all anchor channels can be boosted to a maximum extent, to reduce a quantity of RBs that lose powers, one anchor channel (the second anchor channel) in anchor channels other than the first anchor channel may occupy the other end frequency of the system bandwidth. As shown in FIG. 8d-1 and FIG. 8d-2, the first anchor channel is configured at a left end of the system bandwidth in the figure, the second anchor channel is configured at a right end of the system bandwidth in the figure, and another anchor channel (a third anchor channel) and the first anchor channel are separated by six RBs. In this case, the quantity of RBs that lose powers is 16, and is less than that in the case shown in FIG. 8c-1 and FIG. 8c-2. When there are only two anchor channels, as shown in FIG. 7d, one anchor channel occupies the lowest frequency of the system bandwidth, and the other anchor channel occupies the highest frequency of the system bandwidth. In other words, one anchor channel is configured at a left end of the system bandwidth in the figure, and the other anchor channel is configured at a right end of the system bandwidth in the figure. In this way, a power of each anchor channel can be boosted to a maximum extent, and a quantity of RBs that lose powers is the smallest.

It should be noted that the foregoing examples are not intended to limit a quantity of anchor channels, and there may be more than three anchor channels. Based on the foregoing examples, a person skilled in the art can definitely obtain an anchor channel configuration solution when there are more than three anchor channels.

In the foregoing examples, the anchor channel occupies one RB. A quantity of RBs occupied by the anchor channel is not limited in the examples, and the anchor channel may alternatively occupy two or more RBs. However, for compatibility of a network such as the NB-IoT to which a low power consumption device is connected, only one anchor channel may be set, and the anchor channel occupies only one resource block. The anchor channel occupies one end frequency of the system bandwidth, and power boosting is performed on the anchor channel. In this way, a power of the anchor channel can be boosted to a maximum extent, and a quantity of RBs that lose powers is the smallest.

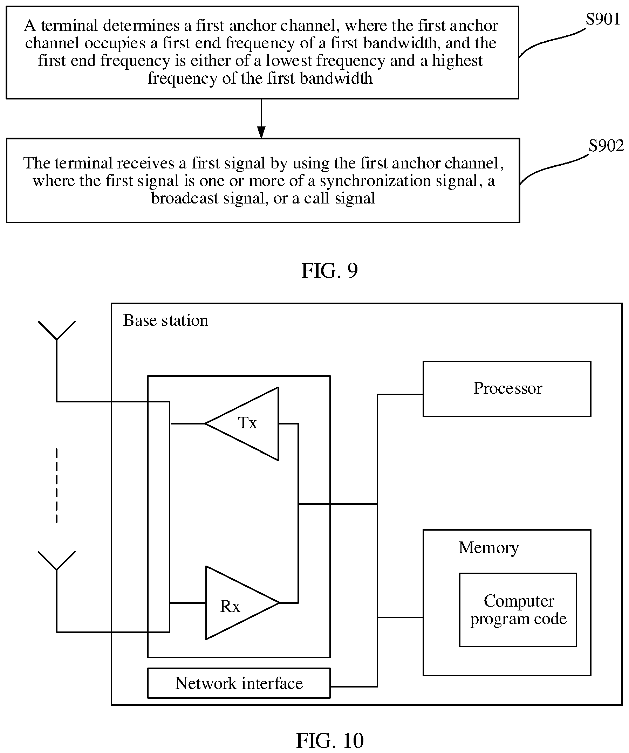

When the first anchor channel occupies one end frequency of the system bandwidth, another anchor channel is adjacent to the first anchor channel, and all of the other anchor channels are adjacent to each other, or when one anchor channel occupies one end frequency of the system bandwidth, one of the other anchor channels occupies the other end frequency of the system bandwidth, and the other anchor channels are adjacent to each other, an embodiment of this application further provides an anchor channel receiving method applied to a terminal. The terminal may be UE. As shown in FIG. 9, the method includes the following steps:
Step S901: The terminal determines a first anchor channel, where the first anchor channel occupies a first end frequency of a first bandwidth, and the first end frequency is either of a lowest frequency and a highest frequency of the first bandwidth.
Step S902: The terminal receives a first signal by using the first anchor channel, where the first signal is one or more of a synchronization signal, a broadcast signal, or a call signal.

The first bandwidth is a system bandwidth.

That the terminal determines a first anchor channel may include: determining the highest frequency and/or the lowest frequency of the first bandwidth based on a center frequency of the first bandwidth; and
determining, based on the highest frequency and/or the lowest frequency, the first anchor channel occupying the highest frequency or the lowest frequency. Further, the method may further include: determining another anchor channel adjacent to the first anchor channel in frequency domain.

If there are at least two anchor channels, the method may further include: determining, by the terminal, a second anchor channel, where the second anchor channel occupies a second end frequency of the first bandwidth, and the second end frequency is another end frequency other than the first end frequency in the lowest frequency and the highest frequency of the first bandwidth. Further, the method may further include: determining another anchor channel adjacent to the second anchor channel in frequency domain.

Specifically, when the first anchor channel occupies one end frequency of the system bandwidth, the another anchor channel is adjacent to the first anchor channel, and all of the other anchor channels are adjacent to each other, the terminal may determine the highest frequency and the lowest frequency of the system bandwidth based on the center frequency of the system bandwidth; determine, based on the highest frequency and the lowest frequency, the anchor channel occupying the highest frequency or the first anchor channel occupying the lowest frequency; and then determine the anchor channel adjacent to the first anchor channel occupying the highest frequency or the first anchor channel occupying the lowest frequency.

Specifically, the terminal may determine the highest frequency and the lowest frequency, namely, two end frequencies of the system bandwidth, based on the center frequency and a size of the system bandwidth. After the two end frequencies are determined, a channel occupying the highest frequency is first found. Then, the channel is searched to determine whether there is one or more of a synchronization signal, a broadcast signal, and a call signal. If there is one or more of the synchronization signal, the broadcast signal, and the call signal, the channel is determined as an anchor channel (namely, the first anchor channel). If there is none of the synchronization signal, the broadcast signal, and the call signal, a channel occupying the lowest frequency continues to be found, and the channel is determined as the anchor channel (namely, the first anchor channel). Alternatively, a channel occupying the lowest frequency may be first found, and then the channel is searched to determine whether there is one or more of a synchronization signal, a broadcast signal, and a call signal. If there is one or more of the synchronization signal, the broadcast signal, and the call signal, the channel is determined as the first anchor channel. If there is none of the synchronization signal, the broadcast signal, and the call signal, a channel occupying the highest frequency continues to be found, and the channel is determined as the first anchor channel. If no other anchor channel is configured, determining of the anchor channel is completed. If another anchor channel is further configured, a channel adjacent to the first anchor channel occupying the end frequency is found. Then, the channel is searched to determine whether there is one or more of a synchronization signal, a broadcast signal, and a call signal. If there is one or more of the synchronization signal, the broadcast signal, and the call signal, the channel is determined as an anchor channel. If there is none of the synchronization signal, the broadcast signal, and the call signal, the channel is not an anchor channel. A channel adjacent to the anchor channel (the anchor channel adjacent to the anchor channel occupying the end frequency) may continue to be found, whether the channel is an anchor channel is determined by searching the channel to determine whether there is one or more of a synchronization signal, a broadcast signal, and a call signal, and so on, until all anchor channels are determined.

Specifically, when one anchor channel occupies one end frequency of the system bandwidth, one of other anchor channels occupies the other end frequency of the system bandwidth, and the other anchor channels are adjacent to each other, the terminal may determine the highest frequency and the lowest frequency of the system bandwidth based on the center frequency of the system bandwidth; separately determine, based on the highest frequency and the lowest frequency, the first anchor channel (or the second anchor channel) occupying the highest frequency and the second anchor channel (or the first anchor channel) occupying the lowest frequency; and then determine an anchor channel adjacent to the first anchor channel (or the second anchor channel) occupying the highest frequency or the second anchor channel (or the first anchor channel) occupying the lowest frequency.

Specifically, the terminal may determine the highest frequency and the lowest frequency, namely, two end frequencies of the system bandwidth, based on the center frequency and a size of the system bandwidth. After the two end frequencies are determined, two anchor channels (the first anchor channel and the second anchor channel) occupying the end frequencies are determined. If no other anchor channel is configured, searching of the anchor channel is completed. If another anchor channel is further configured, a channel adjacent to the anchor channel occupying the highest frequency and a channel adjacent to the anchor channel occupying the lowest frequency are searched. Then, the channel is searched to determine whether there is one or more of a synchronization signal, a broadcast signal, and a call signal. If there is one or more of the synchronization signal, the broadcast signal, and the call signal, the channel is determined as an anchor channel. If there is none of the synchronization signal, the broadcast signal, and the call signal, the channel is a non-anchor channel. For example, three anchor channels are configured, and after the first anchor channel and the second anchor channel occupying the end frequencies are determined, a channel adjacent to the first anchor channel (or the second anchor channel) occupying the highest frequency (or the lowest frequency) is found. Whether the channel is an anchor channel is determined by searching the channel to determine whether there is one or more of a synchronization signal, a broadcast signal, and a call signal. If there is one or more of the synchronization signal, the broadcast signal, and the call signal, the channel is determined as the anchor channel. If there is none of the synchronization signal, the broadcast signal, and the call signal, a channel adjacent to the second anchor channel (or the first anchor channel) occupying the lowest frequency point (or the highest frequency point) continues to be found. Whether the channel is an anchor channel is determined by searching the channel to determine whether there is one or more of a synchronization signal, a broadcast signal, and a call signal. If there is one or more of the synchronization signal, the broadcast signal, and the call signal, the channel is determined as the anchor channel, and so on.

Especially when there are two anchor channels, the UE can quickly find the anchor channel. When there are three or more anchor channels, after the anchor channels corresponding to the two end frequencies are determined, frequencies of other anchor channels adjacent to the anchor channels can also be conveniently obtained, so that all anchor channels can be quickly determined. After determining the anchor channel, the terminal receives one or more of the synchronization signal, the broadcast signal, and the call signal by using the determined anchor channel.

After configuring all anchor channels, a wideband transmission device such as a base station may send a frequency of each anchor channel to the terminal, and the terminal determines, based on the received frequency, an anchor channel corresponding to the frequency. Alternatively, the wideband transmission device sends, to the terminal, a quantity of channels (or a quantity of frequencies) between another anchor channel other than the first another channel and the first anchor channel. After obtaining the highest frequency and/or the lowest frequency of the system bandwidth based on the center frequency and the bandwidth size of the system bandwidth, and determining the first anchor channel based on the highest frequency or the lowest frequency, the terminal determines the another anchor channel based on the quantity of channels (or the quantity of frequencies) between the another anchor channel and the first anchor channel, to determine all anchor channels. The foregoing two manners in which the terminal determines the anchor channel are applicable to a case in which anchor channels are not all adjacent, but a wideband needs to send additional information to the terminal. Therefore, for the wideband transmission device, when only one anchor channel (the first anchor channel) occupies the lowest frequency or the highest frequency of the system bandwidth, another anchor channel is enabled to be adjacent to the first anchor channel, or when two anchor channels (the first anchor channel and the second anchor channel) respectively occupy the lowest frequency and the highest frequency, another anchor channel is enabled to be adjacent to the first anchor channel or the second anchor channel. In this way, the terminal can determine all the anchor channels based on the center frequency and the bandwidth size of the system bandwidth, and the wideband transmission device such as the base station does not need to send additional information, so that a transmission resource can be saved. Alternatively, frequencies occupied by all anchor channels in a communications system may be prespecified, the terminal directly determines the anchor channels based on the specification in the communications system, and the base station does not need to send additional information.

An embodiment of this application further provides a network device. The network device is a wideband transmission device, and the network device may be a base station. As shown in FIG. 10, the network device includes one or more processors, one or more memories, one or more network interfaces, and one or more transceivers (each transceiver includes a receiver Rx and a transmitter Tx) that are connected by using a bus. The one or more transceivers are connected to an antenna or an antenna array. The one or more memories include computer program code. The network interface is connected to a core network by using a link, or is connected to another network device by using a wired or wireless link. In a possible implementation, the processor executes the computer program code in the memory to:
determine a first anchor channel, where the first anchor channel occupies a first end frequency of a first bandwidth, and the first end frequency is either of a lowest frequency and a highest frequency of the first bandwidth.

The transceiver sends a first signal by using the first anchor channel, where the first signal is one or more of a synchronization signal, a broadcast signal, or a call signal.

The first bandwidth is a system bandwidth.

The processor is further configured to perform power boosting on the first anchor channel.

In a possible implementation, the processor is further configured to determine a second anchor channel. The second anchor channel is used to send a second signal, and the second signal is one or more of a synchronization signal, a broadcast signal, or a call signal. In a possible implementation, the second anchor channel occupies a second end frequency of the first bandwidth, and the second end frequency is another end frequency other than the first end frequency in the lowest frequency and the highest frequency of the first bandwidth. In another possible implementation, the second anchor channel is adjacent to the first anchor channel.

In a possible implementation, the first anchor channel and the second anchor channel are not in a same second bandwidth. The second bandwidth is a resolution bandwidth for power spectral density authentication.

The processor may be further configured to perform power boosting on at least one of the first anchor channel and the second anchor channel.

In a possible implementation, the processor is further configured to determine a third anchor channel. The third anchor channel is used to send a third signal, and the third signal is one or more of a synchronization signal, a broadcast signal, or a call signal. In a possible implementation, the third anchor channel is adjacent to the first anchor channel in frequency domain, or the third anchor channel is adjacent to the second anchor channel in frequency domain. In another possible implementation, the third anchor channel is not adjacent to each of the first anchor channel and the second anchor channel in frequency domain.

The processor may be further configured to perform power boosting on at least one of the first anchor channel, the second anchor channel, and the third anchor channel.

This application further provides a communications system. The communications system includes the network device.

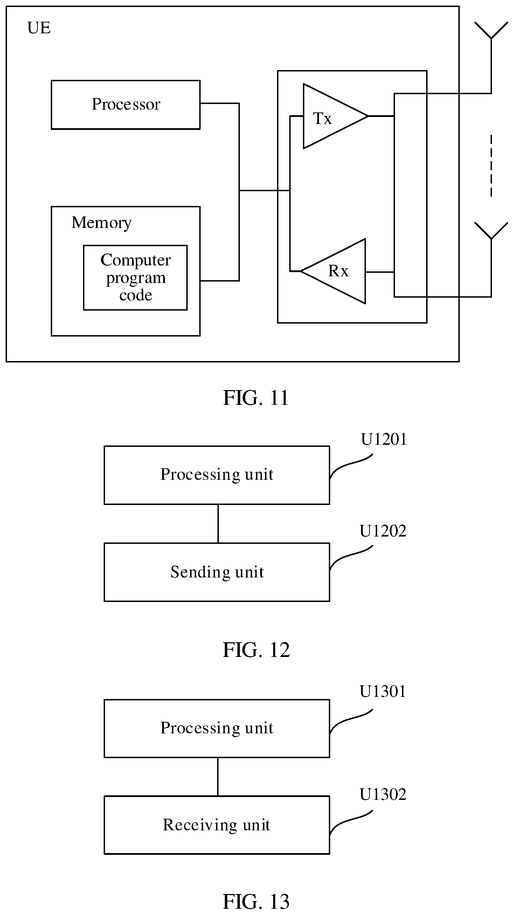

Based on the network device provided in the embodiment of this application, an embodiment of this application further provides a terminal. The terminal performs wireless communication with the network device by using a link. As shown in FIG. 11, the terminal includes one or more processors, one or more memories, and one or more transceivers (each transceiver includes a receiver Rx and a transmitter Tx) that are connected by using a bus. The one or more transceivers are connected to one or more antennas, the one or more memories include computer program code, and the processor executes the computer program code in the memory to determine a first anchor channel. The first anchor channel occupies a first end frequency of a first bandwidth, and the first end frequency is either of a lowest frequency and a highest frequency of the first bandwidth.

The transceiver is configured to receive a first signal by using the first anchor channel, where the first signal is one or more of a synchronization signal, a broadcast signal, or a call signal.

The first bandwidth is a system bandwidth.

That the processor determines a first anchor channel may be specifically: determining the highest frequency and/or the lowest frequency of the first bandwidth based on a center frequency of the first bandwidth; and determining, based on the highest frequency and/or the lowest frequency, the first anchor channel occupying the highest frequency or the lowest frequency. Further, the processor may be further configured to determine another anchor channel adjacent to the first anchor channel in frequency domain.

If there are at least two anchor channels, the processor may be further configured to determine a second anchor channel. The second anchor channel occupies a second end frequency of the first bandwidth, and the second end frequency is another end frequency other than the first end frequency in the lowest frequency and the highest frequency of the first bandwidth. Further, the processor may be further configured to determine another anchor channel adjacent to the second anchor channel in frequency domain.

This application further provides a communications system. The communications system includes the terminal.

An embodiment of this application provides a communications apparatus. The communications apparatus includes at least one processor and at least one memory. The at least one memory stores computer program code, and the processor executes the computer program code in the memory, so that all or some technical solutions provided in any one of the anchor channel transmission method and the possible implementations of the anchor channel transmission method provided in the embodiments of this application can be implemented. The communications apparatus may be the network device in any one of the possible implementations, or may be a chip. When the communications apparatus is a chip, the chip includes a processor including at least one gate circuit and a memory including at least one gate circuit. Each gate circuit includes at least one transistor (for example, a field effect transistor) connected by using a conducting wire, and each transistor is made of a semiconductor material. An embodiment of this application further provides a communications system. The communications system includes the communications apparatus.

An embodiment of this application further provides a communications apparatus. The communications apparatus includes at least one processor and at least one memory. The at least one memory stores computer program code, and the processor executes the computer program code in the memory, so that all or some technical solutions provided in any one of the anchor channel receiving method and the possible implementations of the anchor channel receiving method provided in the embodiments of this application can be implemented. The communications apparatus may be the terminal in any one of the possible implementations, or may be a chip. When the communications apparatus is a chip, the chip includes a processor including at least one gate circuit and a memory including at least one gate circuit. Each gate circuit includes at least one transistor (for example, a field effect transistor) connected by using a conducting wire, and each transistor is made of a semiconductor material. An embodiment of this application further provides a communications system. The communications system includes the communications apparatus, and the communications system may further include a communications apparatus configured to implement the anchor channel transmission method provided in the embodiments of this application.

An embodiment of this application further provides an anchor channel transmission apparatus. As shown in FIG. 12, the apparatus includes:
a processing unit U1201, configured to determine a first anchor channel, where the first anchor channel occupies a first end frequency of a first bandwidth, and the first end frequency is either of a lowest frequency and a highest frequency of the first bandwidth; and
a sending unit U1202, configured to send a first signal by using the first anchor channel, where the first signal is one or more of a synchronization signal, a broadcast signal, or a call signal, where
the first bandwidth is a system bandwidth.

The processor is further configured to perform power boosting on the first anchor channel.

In a possible implementation, the processing unit is further configured to determine a second anchor channel, the sending unit is further configured to send a second signal by using the second anchor channel, and the second signal is one or more of a synchronization signal, a broadcast signal, or a call signal. The second anchor channel may occupy a second end frequency of the first bandwidth, and the second end frequency is another end frequency other than the first end frequency in the lowest frequency and the highest frequency of the first bandwidth.

In a possible implementation, the second anchor channel is adjacent to the first anchor channel. In another possible implementation, the first anchor channel and the second anchor channel are not in a same second bandwidth. The second bandwidth is a resolution bandwidth for power spectral density authentication.

The processing unit may be further configured to perform power boosting on at least one of the first anchor channel and the second anchor channel.

The processing unit may be further configured to determine a third anchor channel. The third anchor channel is used to send a third signal, and the third signal is one or more of a synchronization signal, a broadcast signal, or a call signal. The third anchor channel may be adjacent to the first anchor channel in frequency domain, or the third anchor channel is adjacent to the second anchor channel in frequency domain. Alternatively, the third anchor channel is not adjacent to each of the first anchor channel and the second anchor channel in frequency domain. The processing unit may be further configured to perform power boosting on at least one of the first anchor channel, the second anchor channel, and the third anchor channel.

An embodiment of this application further provides an anchor channel transmission apparatus. As shown in FIG. 13, the apparatus includes:
a processing unit U1301, configured to determine a first anchor channel, where the first anchor channel occupies a first end frequency of a first bandwidth, and the first end frequency is either of a lowest frequency and a highest frequency of the first bandwidth; and
a receiving unit U1302, configured to receive a first signal by using the first anchor channel, where the first signal is one or more of a synchronization signal, a broadcast signal, or a call signal, where
the first bandwidth is a system bandwidth.

The first anchor channel is an anchor channel on which power boosting is performed.

The processing unit is specifically configured to: determine the highest frequency and/or the lowest frequency of the first bandwidth based on a center frequency of the first bandwidth; and determine, based on the highest frequency and/or the lowest frequency, the first anchor channel occupying the highest frequency or the lowest frequency.

In a possible implementation, the processing unit is further configured to determine another anchor channel adjacent to the first anchor channel in frequency domain.

In a possible implementation, the processing unit is further configured to determine, by the terminal, a second anchor channel. The second anchor channel occupies a second end frequency of the first bandwidth, and the second end frequency is another end frequency other than the first end frequency in the lowest frequency and the highest frequency of the first bandwidth.

In a possible implementation, the processing unit is further configured to determine another anchor channel adjacent to the second anchor channel in frequency domain.

An embodiment of this application further provides a computer-readable storage medium, including an instruction. When the instruction is run on a computer, the computer is enabled to perform the anchor channel transmission method provided in the embodiments of this application.

An embodiment of this application further provides a computer-readable storage medium, including an instruction. When the instruction is run on a computer, the computer is enabled to perform the anchor channel receiving method provided in the embodiments of this application.

An embodiment of this application further provides a computer program product including an instruction. When the computer program product is run on a computer, the computer is enabled to perform the anchor channel transmission method provided in the embodiments of this application.

An embodiment of this application further provides a computer program product including an instruction. When the computer program product is run on a computer, the computer is enabled to perform the anchor channel receiving method provided in the embodiments of this application.

It should be noted that in this specification, relational terms such as "first" and "second" are only used to distinguish one object from another, and do not necessarily require or imply that any actual relationship or reverse order exists between these objects. In addition, the terms "include", "comprise", or any other variant is intended to cover a non-exclusive inclusion, so that a circuit, a process, a method, or a device that includes a series of elements includes those elements, and includes other elements that are not expressly listed, or may further include inherent elements of the circuit, process, method, or device. An element preceded by "includes a ..." does not, without more constraints, preclude the presence of additional identical elements in the circuit, process, method, or device that includes the elements.

For same or similar parts in the embodiments in this specification, reference may be made to each other. Especially, the method embodiment is basically similar to the device embodiment, and therefore is described briefly. For related parts, refer to descriptions in the device embodiment.

## Claims

1. An anchor channel transmission method, comprising:
determining, by a network device, a first anchor channel, wherein the first anchor channel occupies a first end frequency of a first bandwidth, and the first end frequency is either of a lowest frequency and a highest frequency of the first bandwidth; and
sending, by the network device, a first signal by using the first anchor channel, wherein the first signal is one or more of a synchronization signal, a broadcast signal, or a call signal, wherein
the first bandwidth is a system bandwidth.

2. The method according to claim 1, wherein the network device performs power boosting on the first anchor channel.

3. The method according to claim 1, wherein the network device determines a second anchor channel, the second anchor channel is used to send a second signal, and the second signal is one or more of a synchronization signal, a broadcast signal, or a call signal.

4. The method according to claim 3, wherein the second anchor channel occupies a second end frequency of the first bandwidth, and the second end frequency is another end frequency other than the first end frequency in the lowest frequency and the highest frequency of the first bandwidth.

5. The method according to claim 3, wherein the second anchor channel is adjacent to the first anchor channel in frequency domain.

6. The method according to claim 3 or 4, wherein the first anchor channel and the second anchor channel are not in a same second bandwidth.

7. The method according to claim 6, wherein the second bandwidth is a resolution bandwidth for power spectral density authentication.

8. The method according to any one of claims 3 to 7, wherein the network device performs power boosting on at least one of the first anchor channel and the second anchor channel.

9. The method according to any one of claims 3 to 7, wherein the network device determines a third anchor channel, the third anchor channel is used to send a third signal, and the third signal is one or more of a synchronization signal, a broadcast signal, or a call signal.

10. The method according to claim 9, wherein the third anchor channel is adjacent to the first anchor channel in frequency domain, or the third anchor channel is adjacent to the second anchor channel in frequency domain.

11. The method according to claim 9, wherein the third anchor channel is not adjacent to each of the first anchor channel and the second anchor channel in frequency domain.

12. The method according to any one of claims 9 to 11, wherein the network device performs power boosting on at least one of the first anchor channel, the second anchor channel, and the third anchor channel.

13. An anchor channel receiving method, comprising:
determining, by a terminal, a first anchor channel, wherein the first anchor channel occupies a first end frequency of a first bandwidth, and the first end frequency is either of a lowest frequency and a highest frequency of the first bandwidth; and
receiving, by the terminal, a first signal by using the first anchor channel, wherein the first signal is one or more of a synchronization signal, a broadcast signal, or a call signal, wherein
the first bandwidth is a system bandwidth.

14. The method according to claim 13, wherein the first anchor channel is an anchor channel on which power boosting is performed.

15. The method according to claim 13 or 14, wherein the determining, by a terminal, a first anchor channel comprises:
determining the highest frequency and/or the lowest frequency of the first bandwidth based on a center frequency of the first bandwidth; and
determining, based on the highest frequency and/or the lowest frequency, the first anchor channel occupying the highest frequency or the lowest frequency.

16. The method according to claim 15, further comprising:
determining another anchor channel adjacent to the first anchor channel in frequency domain.

17. The method according to claim 13 or 14, further comprising:
determining, by the terminal, a second anchor channel, wherein the second anchor channel occupies a second end frequency of the first bandwidth, and the second end frequency is another end frequency other than the first end frequency in the lowest frequency and the highest frequency of the first bandwidth.

18. The method according to claim 17, further comprising:
determining another anchor channel adjacent to the second anchor channel in frequency domain.

19. A communications apparatus, wherein the communications apparatus comprises at least one processor and at least one memory, the at least one memory stores computer program code, and the processor executes the computer program code in the memory to implement the method according to any one of claims 1 to 18.

20. An anchor channel transmission apparatus, comprising:
a processing unit, configured to determine a first anchor channel, wherein the first anchor channel occupies a first end frequency of a first bandwidth, and the first end frequency is either of a lowest frequency and a highest frequency of the first bandwidth; and
a sending unit, configured to send a first signal by using the first anchor channel, wherein the first signal is one or more of a synchronization signal, a broadcast signal, or a call signal, wherein
the first bandwidth is a system bandwidth.

21. The apparatus according to claim 20, wherein the processing unit is further configured to perform power boosting on the first anchor channel.

22. The apparatus according to claim 20 or 21, wherein the processing unit is further configured to determine a second anchor channel, the sending unit is further configured to send a second signal by using the second anchor channel, and the second signal is one or more of a synchronization signal, a broadcast signal, or a call signal.

23. The apparatus according to claim 22, wherein the second anchor channel occupies a second end frequency of the first bandwidth, and the second end frequency is another end frequency other than the first end frequency in the lowest frequency and the highest frequency of the first bandwidth.

24. The apparatus according to claim 22, wherein the second anchor channel is adjacent to the first anchor channel.

25. The apparatus according to claim 22 or 23, wherein the first anchor channel and the second anchor channel are not in a same second bandwidth.

26. The apparatus according to claim 25, wherein the second bandwidth is a resolution bandwidth for power spectral density authentication.

27. The apparatus according to any one of claims 22 to 26, wherein the processing unit is further configured to perform power boosting on at least one of the first anchor channel and the second anchor channel.

28. An anchor channel receiving apparatus, comprising:
a processing unit, configured to determine a first anchor channel, wherein the first anchor channel occupies a first end frequency of a first bandwidth, and the first end frequency is either of a lowest frequency and a highest frequency of the first bandwidth; and
a receiving unit, configured to receive a first signal by using the first anchor channel, wherein the first signal is one or more of a synchronization signal, a broadcast signal, or a call signal, wherein
the first bandwidth is a system bandwidth.

29. The apparatus according to claim 28, wherein the first anchor channel is an anchor channel on which power boosting is performed.

30. The apparatus according to claim 28 or 29, wherein the processing unit is specifically configured to:
determine the highest frequency and/or the lowest frequency of the first bandwidth based on a center frequency of the first bandwidth; and
determine, based on the highest frequency and/or the lowest frequency, the first anchor channel occupying the highest frequency or the lowest frequency.

31. The apparatus according to claim 30, wherein the processing unit is further configured to:
determine another anchor channel adjacent to the first anchor channel in frequency domain.

32. The apparatus according to claim 28 or 29, wherein the processing unit is further configured to:
determine a second anchor channel, wherein the second anchor channel occupies a second end frequency of the first bandwidth, and the second end frequency is another end frequency other than the first end frequency in the lowest frequency and the highest frequency of the first bandwidth.

33. The apparatus according to claim 32, wherein the processing unit is further configured to:
determine another anchor channel adjacent to the second anchor channel in frequency domain.

34. A computer-readable storage medium, comprising an instruction, wherein when the instruction is run on a computer, the computer is enabled to perform the method according to any one of claims 1 to 18.

35. A computer program product comprising an instruction, wherein when the computer program product is run on a computer, the computer is enabled to perform the method according to any one of claims 1 to 18.
